# NEW EUROPEAN PATENT SPECIFICATION

(11) **EP 0 623 765 B2**
(45) Date of publication and mention of the opposition decision: **23.01.2002**
(45) Mention of the grant of the patent: 29.04.1998
(21) Application number: 94102411.9
(22) Date of filing: 17.02.1994
(51) Int. Cl.: F16G 1/06, F16G 5/06

(54) **Heterofilaments for cord reinforcement in power transmission belts**
Heterofasern für Verstärkungsseile in Treibriemen
Hétérofilament pour corde de renforcement dans des courroies de transmission

(30) Priority: 19.02.1993 US 20875
(43) Date of publication of application: 09.11.1994
(73) Proprietor: ARTEVA TECHNOLOGIES S.à.r.l., 8001 Zürich (CH)
(72) Inventor: Stanhope, Harry W., Concord, NC 28027 (US)
(74) Representative: von Kreisler, Alek, Dipl.-Chem.

(56) References cited:
- WO-A-90/14452
- DE-A- 2 645 360
- DE-A- 4 136 335
- GB-A- 1 205 281
- US-A- 3 616 183
- US-A- 3 998 988
- US-A- 4 522 614
- DATABASE WPI Week 9029, Derwent Publications Ltd., London, GB; AN 90-221290 & JP-A-02 150 528 (TORAY) 8 June 1990
- PATENT ABSTRACTS OF JAPAN vol. 16, no. 137 (M-1231) 7 April 1992 & JP-A-04 000 040 (TORAY) 6 January 1992
- DATABASE WPI Week 9134, Derwent Publications Ltd., London, GB; AN 91-248744 & JP-A-3 161 517 (TORAY) 11 July 1991
- DATABASE WPI Week 9102, Derwent Publications Ltd., London, GB; AN 91-012481 & JP-A-2 286 939 (YOKOHAMA RUBBER) 27 November 1990
- DATABASE WPI Week 7007, Derwent Publications Ltd., London, GB; AN 70-10237R & JP-B-45 003 291 (ASAHI CHEM)
- PATENT ABSTRACTS OF JAPAN vol. 17, no. 67 (C-1025) 10 February 1993 & JP-A-04 272 226 (KURARAY) 29 September 1992
- PATENT ABSTRACTS OF JAPAN vol. 3, no. 35 (M-53) 24 March 1979 & JP-A-54 009 347 (TSUBAKIMOTO CHAIN) 24 January 1979

## Description

### Field of the Invention

This invention is directed to heterofilament yarns being used for the cord reinforcement in power transmission belts.

### Background of the Invention

Power transmission belts, for example V-belts and ribbed V-belts, are well known (See: Wake, N.C., et al., "Textile Reinforcement of Elastomers", Applied Science Publishers, Englewood, NJ, 1982). Such power transmission belts typically comprise rubber impregnated fabric layers disposed on the belt's innermost and outermost circumerential surfaces, and a layer of a masticated rubber/staple fiber mixture and a layer of circumferentially disposed reinforcing cord being sandwiched therebetween. The reinforcing cord or "stiff cord" is typically made from an adhesive impregnated, multi-filament yarn. Exemplary yarns include filaments of nylon, polyester, and rayon, polyester being preferred because of its superior properties.

Generally, these belts are made by laying up the above-mentioned layers, in an inverted order, on a drum. First, a layer of rubber impregnated fabric is laid on the drum. Then, the reinforcing cords are laid up. 'Next, a layer of masticated rubber/staple fiber is laid up. Finally, a second layer of rubber impregnated fabric is applied to the construction. The foregoing is then vulcanized, thereby forming a "large tube". From this tube, individual belts are cut.

One problem with this type of belt is "cord pop-out". "Cord pop-out", or fraying of cord from the belt's cut edge, seriously diminishes the belt's useable life span because the loss of cord from the belt accelerates wear on the belt leading to its ultimate failure. Cord pop-out and situations which lead to cord pop-out can arise during manufacture and use of the belt. In manufacture, when belts are cut from the tube, the cord or the yarn in the cord can be stripped away. In use, as the belts leaves the sheave, the cord or the yarn may "pop-aut" of the belt because of the reduction of lateral compressive force on the belt.

"Cord pop-out" is such a serious concern that the reinforcing cords or "stiff cords" are impregnated with an adhesive to facilitate inter-filament bonding. Inter-filament bonding within the yarn and cord reduces the possibility of individual filaments popping from the belt and beginnig to fray from the belt. Typical adhesives for interfilament bonding include isocyanate systems which are normally applied to the cord in a solvent carrier. The solvent/isocyanate systems is necessary so that the isocyanate penetrates in between the filaments of the yarn and thereby facilitates inter-filament bonding (See: Wake, W.C., Ibid., pg. 89-90). These solvents, however, pose significant environmental problems (See: Wake, N.C., Ibid.). These adhesive systems for inter-filament bonding should be differentiated from the resinol-for-maldehyde-latex (RFL) systems (aqueous based systems) which are applied to the cord. The RFL systems enhance and promote adhesion of the cord to the surrounding rubber.
GB-A-1 205 281 describes an article of manufacture comprising a cord adapted for reinforcing a power transmission belt by being circumferentially disposed within said belt, said cord comprising a sheath/core bicomponent heterofilament wherein one portion of the core portion of the sheath/core heterofilament comprises a relatively high melting point polymer component which is polyethylene terephthalate and the sheath portion of the sheath/core heterofilament is fusible and comprises a relatively low melting point polymer.

Despite the teaching of GB-A-1 205 281, there is still a need to increase the ability of the sheath portion of the sheath/core heterofilament to fuse without affecting the core portion.

### Summary of the Invention

This invention is directed to
(1) an article of manufacture comprising a cord (30) adapted for reinforcing a power transmission belt by being circumferentially disposed within said belt, said cord comprising a side-by-side or sheath/core bi-component heterofilament (34) wherein one portion of the side-by-side heterofilament or the core portion (38) of the sheath/core heterofilament comprises a relatively high melting point polymer component which is polyethylene terephthalate and the other portion of the side-by-side heterofilament or the sheath portion (36) of the sheath/core heterofilament is fusible and comprises a relatively low melting point polymer which is polybutylene terephthalate;
(2) a power transmission belt (10) having circumferentially disposed reinforcing cords (30) as defined in (1) above; and
(3) a multifilament yarn (32) comprising sheath/core heterofilaments (34) having a fusible sheath portion (36) and composed of a relatively high melting point polymer component and a relatively low melting point component, wherein said relatively low melting point component is polybutylene terephthalate and comprises said sheath portion and the relatively high melting point component is polyethylene terephthalate and comprises the core (38) of the sheath/core heterofilaments.

### Description of the Drawings

For the purpose of illustrating the invention, there is shown in the drawings a form which is presently preferred; it being understood, however, that this invention is not limited to the precise arrangements and instrumentalities shown.

Figure 1 is an isometric view of the cross section of a power transmission belt.

Figure 2 is an isometric cross sectional view of a prior art cord comprising of plurality of fibers.

Figure 3 is an isometric view of a cord made with heterofilaments according to the present invention.

### Detailed Description of the Invention

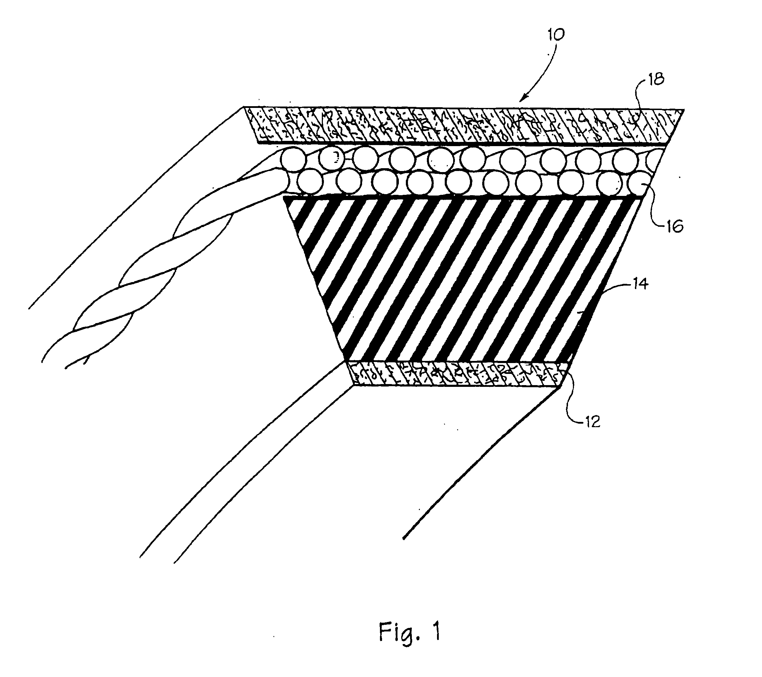

Referring to Figure 1, there is shown a power transmission belt 10. Belt 10 is representative of the construction of power transmission belts, and illustrates the invention, however, this particular construction should not be construed as limiting the invention. Belt 10 is referred to, by those of ordinary skill in the art, as "cut edge" or "raw edge" V-belt. Those of ordinary skill will readily recognize the applicability of this invention to other power transmission belts, e.g. ribbed V-belts.

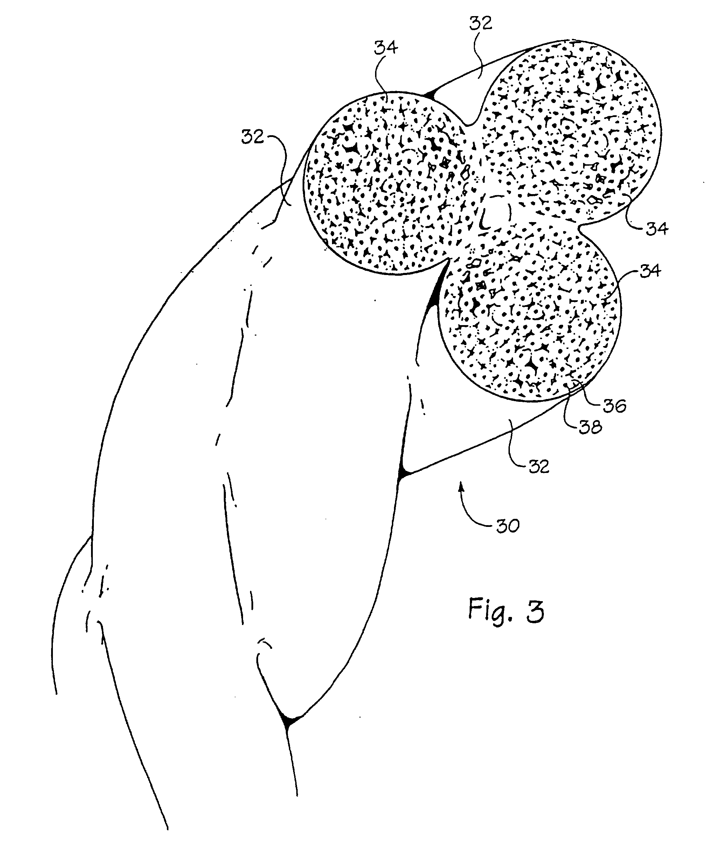

The components of belt 10 generally include: a rubber coated fabric 12; a layer 14 of masticated rubber with a fiber filler; a reinforced cord section 16 (section 16 comprises a plurality of heterofilament cords, see Figure 3); and a rubber coated fabric 18. These power transmission belts may be manufactured in any example: "Vanderbilt Rubber Handbook", R. T. Vanderbilt Co., Inc., Norwalk, CT (1978).; Blow, C.M., et al. (ed.), "Rubber Technology and Manufacture", 2nd Edition, The Plastics and Rubber Institute University Press, NY, NY, (1989).; and Wake, W.C., et al., "Textile Reinforcement of Elastomers", Applied Science Publishers, Englewood, NJ, (1982).; each of these references are incorporated herein by reference.

The term "filament" or "fiber", as used herein, refers to the components which make up a yarn. The term "yarn", as used herein, is a generic term for a continuous strand of fibers, or filaments. The term "cord", as used herein, refers to the product formed by twisting together or "plying" one or more yarn.

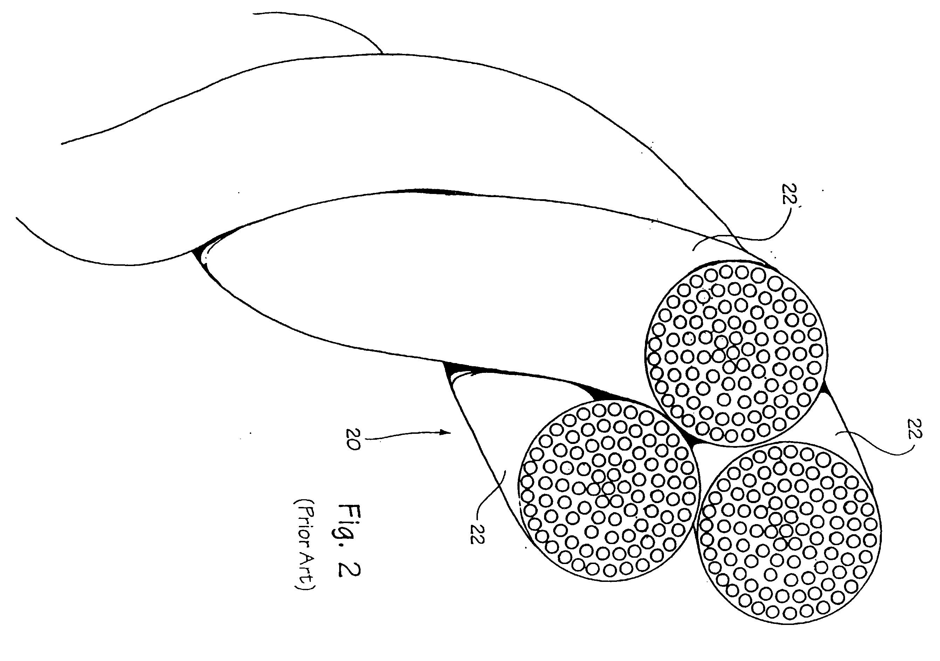

Referring to Figures 2 and 3, a prior art cord 20 and inventive cord 30 are illustrated respectively. Both cords are shown as being made from three plied yarns. Cords used in the manufacture of power transmission belts are not so limited and neither is the instant invention. Prior art cord 20 comprises three plied yarns 22. Yarn 22 may be a 1000 total denier yarn of 192 filaments. The individual filaments are bound together with an adhesive system (i.e., the inter-filament bonding systems) as discussed above.

Cord 30 comprises yarns 32. Yarns 32 comprise heterofilaments 34. Heterofilaments 34 are illustrated as, but not limited to, sheath/core heterofilaments. Sheath 36 surrounds core 38. These heterofilaments 34 include a fuseable portion (e.g., sheath 36) which can eliminate the need for the solvent/adhesive systems, because the heterofilaments, when heated under pressure, as is well known, can bond to one another. These heterofilaments 34 may be fused prior to manufacture of the belt or during vulcanization of the belt or a combination of both.

Heterofilaments are known in the art (e.g., see U. S. Patent Nos. 3,616,183 and 3,998,988).

Heterofilaments are known as "bi-component fibers", "conjugate fibers", "heterofils", or "composite fibers". Heterofilament, as used herein, refers to a filament made from a relatively high melting polymer component, which is polyethylene terephthalate (PET), and a relatively low melting polymer component, which is polybutylene terephthalate (PBT). Generally, the heterofilaments are either a sheath/core type or a side-by-side type. In either embodiment, both components of the heterofilament will, of course, be present in a continuous phase.

The high melting point polymer component has a melting point about 30°C greater than that of the lower melting point polymer component. Preferably, a sheath/core heterofilament is used, with the core comprising of 80% of the heterofilament.

In a sheath/core heterofilament the core comprises polyethylene terephthalate (PET) and the sheath comprises polybutylene terephthalate (PBT).

## Claims

1. An article of manufacture comprising a cord (30) adapted for reinforcing a power transmission belt by being circumferentially disposed within said belt, said cord comprising a side-by-side or sheath/core bi-component heterofilament (34) wherein one portion of the side-by-side heterofilament or the core portion (38) of the sheath/core heterofilament comprises a relatively high melting point polymer component which is polyethylene terephthalate and the other portion of the side-by-side heterofilament or the sheath portion (36) of the sheath/core heterofilament is fusible and comprises a relatively low melting point polymer which is polybutylene terephthalate.

2. The article according to claim 1, wherein the cord comprises yarns (32), said yarns being multifilament yarns comprising heterofilaments (34) having fusible portions as described in claim 1 whereby the heterofilaments can bond with one another when heated under pressure.

3. The article according to claim 1, wherein the cord comprises yarns (32), said yarns being multifilament yarns comprising heterofilaments (34) as described in claim 1 which are bonded to one another by fusion of their fusible portions.

4. The article according to claim 1, 2 or 3, wherein each heterofilament (34) is a sheath/core heterofilament of which the sheath surrounds a core.

5. The article according to claim 4, wherein the polyethylene terephthalate has a melting point 30°C greater than that of the polybutylene terephthalate.

6. A power transmission belt (10) having circumferentially disposed reinforcing cords (30) as defined in any of claims 1 to 5.

7. The power transmission belt (10) according to claim 6 which is a cut edge V-belt.

8. Multifilament yarn (32) comprising sheath/core heterofilaments (34) having a fusible sheath portion (36) and composed of a relatively high melting point polymer component and a relatively low melting point component, wherein said relatively low melting point component is polybutylene terephthalate and comprises said sheath portion and the relatively high melting point component is polyethylene terephthalate and comprises the core (38) of the sheath/core heterofilaments.

## Patentansprüche

1. Fertigungsgegenstand, umfassend einen Kord (30), der zur Verstärkung eines Kraftübertragungsriemens geeignet ist, indem er in Umfangsrichtung in dem Riemen angeordnet wird, wobei der Kord ein Seite-an-Seite- oder Hülle/Kern-Zweikomponentenheterofilamente (34) umfasst, worin ein Teil des Seite-an-Seite-Heterofilaments oder des Kernteils (38) des Hülle/Kern-Heterofilaments eine Polymerkomponente mit relativ hohem Schmelzpunkt umfasst, die Polyethylenterephthalat ist, und der andere Teil des Seite-an-Seite-Heterofilaments oder des Hüllenteils (36) des Hülle/Kern-Heterofilaments schmelzbar ist und ein Polymer mit einem relativ niedrigen Schmelzpunkt umfasst, das Polybutylenterephthalat ist.

2. Gegenstand gemäß Anspruch 1, worin der Kord Garne (32) umfasst, diese Garne Multifilamentgarne sind, die Heterofilamente (34) umfassen, welche schmelzbare Anteile aufweisen - wie in Anspruch 1 beschrieben ist -, wobei sich die Heterofilamente beim Erwärmen unter Druck miteinander verbinden können.

3. Gegenstand gemäß Anspruch 1, worin der Kord Garne (32) umfasst, diese Garne Multifilamentgarne sind, die Heterofilamente (34) - wie in Anspruch 1 beschrieben ist - umfassen, welche durch Schmelzen ihrer schmelzbaren Anteile miteinander verbunden werden.

4. Gegenstand gemäß den Ansprüchen 1, 2 oder 3, worin das Heterofilament (34) ein Hülle/Kern-Heterofilament ist, dessen Hülle einen Kern umgibt.

5. Gegenstand gemäß Anspruch 4, worin das Polyethylenterephthalat einen Schmelzpunkt aufweist, der 30 °C höher ist als derjenige des Polybutylenterephthalats.

6. Kraftübertragungsriemen (10), der in Umfangsrichtung angeordnete Verstärkungskords (30) gemäß irgendeinem der Ansprüche 1 bis 5 aufweist.

7. Kraftübertragungsriemen (10) gemäß Anspruch 6, der ein Keilriemen ist.

8. Multifilamentgarn (32), das Hülle/Kern-Heterofilamente (34) mit einem schmelzbaren Hüllenanteil (36) umfasst und aus einer Polymer-Komponente mit einem relativ hohen Schmelzpunkt und einer Komponente mit einem relativ niedrigen Schmelzpunkt besteht, worin die Komponente mit dem relativ niedrigen Schmelzpunkt Polybutylenterephthalat ist und diesen Hüllenanteil umfasst, und die Komponente mit dem relativ hohen Schmelzpunkt Polyethylenterephthalat ist und den Kern (38) der Hülle/Kern-Heterofilamente umfasst.

## Revendications

1. Article manufacturé comprenant un câble (30) conçu pour renforcer une courroie de transmission de puissance en étant disposé circonférentiellement dans cette courroie, ce câble comprenant un hétérofilament (34), dans lequel une partie de l'hétérofilament côte-à-côte ou le noyau (38) de l'hétérofilament à gaine/noyau comprend un constituant polymère à point de fusion relativement élevé qui consiste en polyéthylène-téréphtalate et l'autre partie de l'hétérofilament côte-à-côte ou bien la gaine (36) de l'hétérofilament à gaine/noyau est fusible et comprend un polymère à point de fusion relativement bas qui consiste en polybutylène-téréphtalate.

2. Article suivant la revendication 1, dans lequel le câble comprend des fils (32), ces fils étant des fils multifilamentaires comprenant des hétérofilaments (34) ayant des parties fusibles, suivant la description dans la revendication 1, ce qui fait que les hétérofilaments peuvent se lier les uns aux autres lorsqu'ils sont chauffés sous pression.

3. Article suivant la revendication 1, dans lequel le câble comprend des fils (32), ces fils étant des fils multifilamentaires comprenant des hétérofilaments (34), suivant la description dans la revendication 1, qui sont liés les uns aux autres par fusion de leurs parties fusibles.

4. Article suivant la revendication 1, 2 ou 3, dans lequel chaque hétérofilament (34) est un hétérofilament à gaine/noyau dont la gaine entoure un noyau.

5. Article suivant la revendication 4, dans lequel le polyéthylène-téréphtalate a un point de fusion supérieur de 30°C à celui du polybutylène-téréphtalate.

6. Courroie de transmission de puissance (10) comportant des câbles de renforcement (30) disposés circonférentiellement, tels que définis dans l'une quelconque des revendications 1 à 5.

7. Courroie de transmission de puissance (10) suivant la revendication 6, qui est une courroie en V à bords coupés.

8. Fil multifilamentaire (32) comprenant des hétérofilaments à gaine/noyau (34) ayant une partie fusible (36) servant de gaine et composé d'un constituant polymère à point de fusion relativement élevé et d'un constituant polymère à point de fusion relativement bas, dans lequel ce constituant polymère à point de fusion relativement bas est le polybutylène-téréphtalate et constitue la partie servant de gaine, et le constituant polymère à point de fusion relativement élevé est le polyéthylène-téréphtalate et constitue le noyau (38) des hétérofilaments à gaine/noyau.
